(19) Europäisches Patentamt
European Patent Office
Office européen des brevets

(11) **EP 1 746 862 A1**

(12) **EUROPEAN PATENT APPLICATION**
published in accordance with Art. 158(3) EPC

(43) Date of publication:
**24.01.2007 Bulletin 2007/04**

(51) Int Cl.:
*H04S 1/00* *(2006.01)*   *B60R 11/02* *(2006.01)*
*H04R 1/02* *(2006.01)*

(21) Application number: **05736720.3**

(22) Date of filing: **27.04.2005**

(86) International application number:
**PCT/JP2005/008041**

(87) International publication number:
**WO 2005/112508 (24.11.2005 Gazette 2005/47)**

(84) Designated Contracting States:
**DE FR GB**

(30) Priority: **13.05.2004 JP 2004143990**

(71) Applicant: **Pioneer Corporation**
**Tokyo 153-8654 (JP)**

(72) Inventors:
 • **SUGAWARA, K.;**
 **c/o Kawagoe koujou, Pioneer Co.**
 **Kawagoe-shi, Saitama 35 08555 (JP)**
 • **YUSA, H.;**
 **c/o Kawagoe koujou, Pioneer Co.**
 **Kawagoe-shi, Saitama 35 08555 (JP)**

 • **MAKINO, A.;**
 **c/o Kawagoe koujou, Pioneer Co.**
 **Kawagoe-shi, Saitama 35 08555 (JP)**
 • **SATO, S.;**
 **c/o Kawagoe koujou, Pioneer Co.**
 **Kawagoe-shi, Saitama 35 08555 (JP)**
 • **YOSHIDA, K.;**
 **c/o Kawagoe koujou, Pioneer Co.**
 **Kawagoe-shi, Saitama 3508555 (JP)**

(74) Representative: **Popp, Eugen**
 **MEISSNER, BOLTE & PARTNER**
 **Postfach 86 06 24**
 **81633 München (DE)**

(54) **ACOUSTIC SYSTEM**

(57)    It is an object of the present invention to provide an acoustic systemwhich, whenproducinga sound from pillow speakers, can provide a natural feeling, without bringing about any incongruity to a listener.
The acoustic system is provided with a low pass filter 3x for extracting a low frequency component of a reproduction signal Sin (Din) outputted from a signal source 2 and supplying the extracted signal to pillow speakers PR and PL, and a high pass filter 3y for extracting a high frequency component of the reproduction signal Sin (Din) and supplying the extracted signal to a normal position speaker PF3, thereby fixing a sound emitted from the pillow speakers PR, PL and a sound emitted from the normal position speaker PF3 on the normal position speaker PF3 side.

*FIG.2 (a)*

# FIG.2 (b)

**Description**

Technical Field

The present invention relates to an acoustic system which has pillow speakers.

Background Technique

Conventionally, there has been known an acoustic system having pillow speakers, as disclosed in Japanese Unexamined PatentApplication Publication No. 2001-112572.

Such an acoustic system is so formed that a pair of speakers called pillow speakers are located on a headrest of a chair in a manner such that the head of a listener is interposed between the two speakers, thereby allowing a sound such as music or the like to be emitted from the respective pillow speakers towards the two ears of the listener sitting in the chair.

Patent Document 1: Japanese Unexamined Patent Application Publication No. 2001-112572.

Disclosure of the Invention

Problem(s) to be Solved by the Invention

However, with regard to the acoustic system disclosed by Japanese Unexamined Patent Application Publication No.2001-112572, since a music or the like is emitted only from the pillow speakers provided on the headrest of a chair as mentioned above, a sound image of the music or the like will be fixed in a position behind a listener on his or her left or right side, on the true left or right side of the listener, behind or inside the head of the listener, hence causing the listener to have an incongruent or clogged feeling.

For example, when pillow speakers are provided on a headrest of a driver's seat within a vehicle such as an automobile, a driver sitting in the driver's seat will receive a music or the like emitted from speaker located on the front side within the vehicle, as a music or the like emitted behind his or her head on the left or right side thereof, thus causing him or her to have an incongruent feeling rather than a natural feeling.

The present invention has been accomplished in order to solve the above problem and it is an object of the invention to provide an acoustic systemwhich, when producing a sound from pillow speakers, can provide a natural feeling, without bringing about any incongruity to a listener.

Means for Solving the Problem(s)

According to an invention recited in claim 1, there is provided an acoustic system for driving pillow speakers provided on a headrest of a chair and a normal position speaker provided in a predetermined position of an area surrounding the chair, in accordance with a reproduction signal outputted from a signal source. This acoustic system comprises: a first low pass filter for extracting a low frequency component of the reproduction signal and supplying the low frequency component to the pillow speakers; and a first high pass filter for extracting a high frequency component of the reproduction signal and supplying the high frequency component to the normal position speaker.

Brief Description of the Drawings

Fig. 1 is a view showing a positional relation between pillow speakers and front speakers.
Fig. 2 provides diagrams showing a constitution of an acoustic system according to an embodiment of the present invention.
Fig. 3 provides diagrams showing a constitution of a control section according to example 1 which is more concrete than the acoustic system shown in Fig. 2.
Fig. 4 provides diagrams showing a constitution of a control section according to example 2 which is more concrete than the acoustic system shown in Fig. 2.
Fig. 5 provides diagrams showing a constitution of a control section according to example 3 which is more concrete than the acoustic system shown in Fig. 2.
Fig. 6 provides diagrams showing a constitution of a control section according to example 4 which is more concrete than the acoustic system shown in Fig. 2.
Fig. 7 is a diagram showing a constitution of a control section according to example 5 which is more concrete than the acoustic system shown in Fig. 2.

Fig. 8 is a diagram showing a constitution of a control section according to example 6 which is more concrete than the acoustic system shown in Fig. 2.

Fig. 9 is a diagram showing a constitution of a control section according to example 7 which is more concrete than the acoustic system shown in Fig. 2.

Best Mode for Carrying Out the Invention

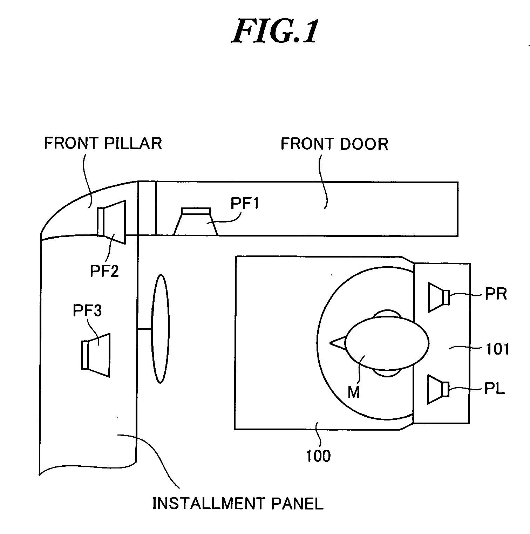

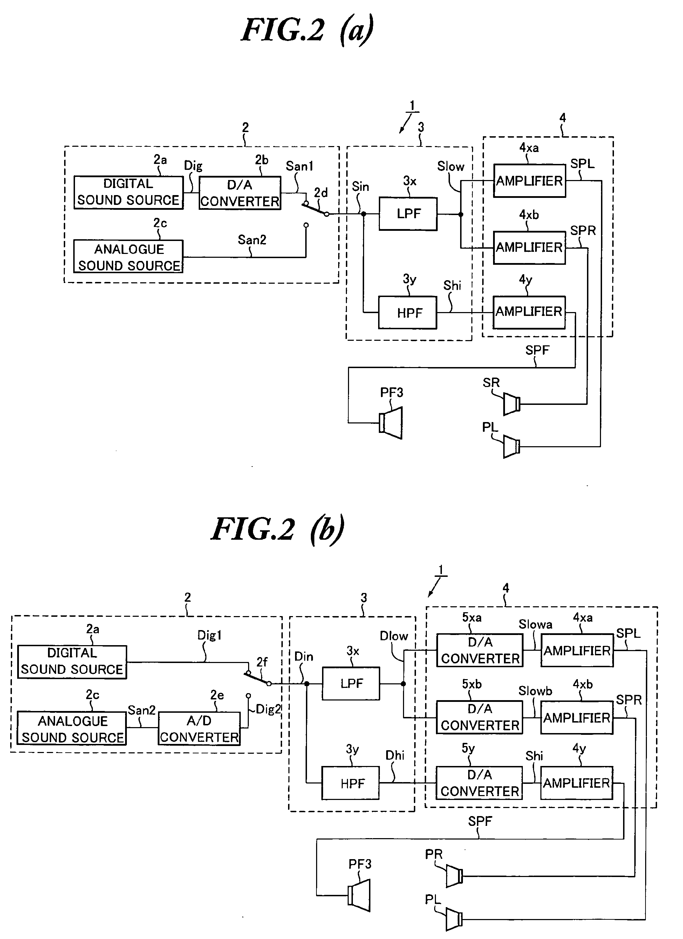

In the following, description will be given to explain an acoustic system formed according to an embodiment of the present invention. Fig. 1 is a view showing a positional relation of speakers driven by an acoustic system of the present embodiment. Fig. 2 provides block diagrams showing a constitution of an acoustic system formed according to the present embodiment, representing two states in Fig. 2(a) and Fig. 2(b).

As shown in Fig. 1, the acoustic systemof the present embodiment drives pillow speakers PR and PL provided on a headrest 101 of a chair 100 in which a listener M sits down, and front speakers PF1, PF2, and PF3 arranged ahead of the listener M sitting in the chair 100. Namely, once the listener M sits down on the chair 100, the speakers PR and PL located behind the listener on his or her left and right sides as well as the front speakers PF1, PF2, and PF3 located in the surrounding areas of the chair 100 and arranged in predetermined positions ahead of the listener M will be driven.

If described in more detail, when the acoustic system of the present embodiment is used as a vehicle acoustic system, the pillow speakers PR and PL will be provided on the headrest 101 of the driver's seat 100 located within a vehicle, while the front speakers PF1, PF2, and PF3 may be provided in a manner such that a first one is located on a front door on the driver's side, a second one is located between the front door and the front glass, and a third one is located within an instrument panel.

The present embodiment is based on an example in which the front speaker PF3 is used as a normal position speaker. In practice, such a normal position speaker receives a high frequency component which is a reproduction signal component to be supplied to the pillow speakers PR and PL. On the other hand, such a normal position speaker does not have to be located only in a position ahead of the listener M, but can also be located behind or beside the listener M.

As shown, an acoustic system 1 shown in Fig. 2(a) has a signal source 2, a control section 3, and a drive section 4.

The signal source 2 comprises: a digital sound source 2a which reproduces and then outputs a reproduction signal Dig consisting of digital data such as music data and other audio data recorded in CD (Compact Disc), DVD (Digital Versatile Disc) or the like; D/A converter 2b for converting the reproduction signal Dig into an analogue reproduction signal San1; an analogue sound source 2c for outputting an analogue reproduction signal San2 of a radio receiver or the like; and a switchover section 2d for selecting reproduction signal San1 or San2 in accordance with an instruction from a user and supplying the selected signal as an analogue signal Sin to the control section 3.

The control section 3 comprises: a low pass filter 3x formed of an analogue circuit which allows the passing of a low frequency component of the reproduction signal Sin; and a high pass filter 3y formed of an analogue circuit which allows the passing of a high frequency component of the reproduction signal Sin. In this way, a user can operate an operating section (not shown) to independently and variably adjust a high cut-off frequency of the low pass filter 3x and a low cut-off frequency of the high pass filter 3y.

The drive section 4 comprises amplifiers 4xa, 4xb, and 4y each having a power amplifying circuit formed of an analogue circuit.

The amplifier 4xa performs an amplification or the like on a reproduction signal Slow of a low frequency component outputted from the low pass filter 3x so as to output a reproduction signal SPL for driving the left side pillow speaker PL. The amplifier 4xb performs an amplification or the like on the reproduction signal Slow of the low frequency component so as to output a reproduction signal SPR for driving the right side pillow speaker PR. The amplifier 4y performs an amplification or the like on a reproduction signal Shi of a high frequency component outputted from the high pass filter 3y so as to output a reproduction signal SPF for driving the normal position speaker PF3.

According to the acoustic system 1 shown in Fig. 2(a), the low pass filter 3x and the high pass filter 3y will extract a high frequency component and a low frequency component from the reproduction signal Sin, so that the pillow speakers PR and PL can operate in accordance with the reproduction signals SPL, SPR of low frequency components so as to emit a low frequency sound to the left and right ears of a user, while the normal position speaker PF3 operates in accordance with the reproduction signal SPF of a high frequency component to emit a high frequency sound from a position in front of the user.

In this way, once a high frequency sound is emitted from the normal position speaker PF3 and a low frequency sound is emitted from the pillow speakers PR and PL, a sound image will be fixed on the high frequency sound side, rendering a user (a driver or the like) sitting in a driver's seat such as the chair 100 to feel as if a sound such as a music or the like is being emitted from the normal position speaker PF3. For this reason, using the acoustic system 1 of the present embodiment makes it possible for a driver or the like to enjoy a music or the like with a natural feeling which does not involve an incongruity.

Moreover, when a user operates the operating section to adjust a high cut-off frequency of the low pass filter 3x or a low cut-off frequency of the high pass filter 3y, it is possible to relatively change a frequency band between a low frequency sound emitted from the pillow speakers PR, PL and a high frequency sound emitted from the normal position speaker PF3. In this way, it is possible to fix a sound image in a sound image normal position desired by a user, thereby providing an acoustic space required by the user.

Moreover, the acoustic system 1 shown in Fig. 2(a) is preferable to have the signal source 2 which outputs an analogue reproduction signal Sin.

Next, description will be given to explain an acoustic system 1 shown in Fig. 2(b). In Fig. 2(b), elements which are the same as or corresponding to those in Fig. 2(a) are represented by the same reference numerals.

As shown in Fig. 2(b), the acoustic system 1 has a signal source 2, a control section 3, and a drive section 4.

The signal source 2 comprises: a digital sound source 2a which reproduces and then outputs a reproduction signal Dig1 consisting of digital data such as music data and other audio data recorded in CD (Compact Disc), DVD (Digital Versatile Disc) or the like; an analogue sound source 2c for outputting an analogue reproduction signal San2 of a radio receiver or the like; an A/D converter 2e for A/D converting the reproduction signal San2 into a reproduction signal Dig2 consisting of digital data and then outputting the same; and a switchover section 2f for selecting a reproduction signal Dig1 or Dig2 in accordance with an instruction from a user and supplying the selected signal as a reproduction signal Din consisting of digital data to the control section 3.

The control section 3 comprises: a low pass filter 3x formed of a digital circuit which allows the passing of a low frequency component of the reproduction signal Din; and a high pass filter 3y formed of a digital circuit which allows the passing of a high frequency component of the reproduction signal Din. In this way, a user can operate an operating section (not shown) to independently and variably adjust a high cut-off frequency of the low pass filter 3x and a low cut-off frequency of the high pass filter 3y.

The drive section 4 comprises: D/A converter 5xa and an amplifier 4xa, D/A converter 5xb and an amplifier 4xb, all connected in series with the output of the low pass filter 3x; D/A converter 5y and an amplifier 4y, all connected in series with the output of the high pass filter 3y.

The D/A converter 5xa operates to D/A convert a reproduction signal Dlow of a low frequency component outputted from the low pass filter 3x into an analogue reproduction signal Slowa, while the amplifier 4xa performs a power amplification or the like, thereby outputting a reproduction signal SPL for driving the left side pillow speaker PL. Similarly, the D/A converter 5xb operates to D/A convert a reproduction signal Dlow of a low frequency component into an analogue reproduction signal Slowb, while the amplifier 4xb performs a power amplification or the like, thereby outputting a reproduction signal SPR for driving the right side pillow speaker PR. Further, the D/A converter 5xb operates to D/A convert a reproduction signal Dhi of a high frequency component outputted from the high pass filter 3y into an analogue reproduction signal Shi, while the amplifier 4y performs a power amplification or the like, thereby outputting a reproduction signal SPF for driving the normal position speaker SPF.

According to the acoustic system 1 shown in Fig. 2(b), the low pass filter 3x and the high pass filter 3y will perform a digital signal processing to extract a low frequency component and a high frequency component from the reproduction signal Din, so that the pillow speakers PR and PL can operate in accordance with the reproduction signals SPL, SPR of low frequency component so as to emit a low frequency sound to the left and right ears of a user, while the normal position speaker PF3 operates in accordance with the reproduction signal SPF of a high frequency component to emit a high frequency sound from a position in front of the user.

In this way, once a high frequency sound is emitted from the normal position speaker PF3 and a low frequency sound is emitted from the pillow speakers PR and PL, a sound image will be fixed on the high frequency sound side, rendering a user (a driver or the like) sitting in a driver's seat such as the chair 100 to feel as if a sound such as a music or the like is being emitted from the normal position speaker PF3. For this reason, using the acoustic system 1 of the present embodiment makes it possible for a driver or the like to enjoy a music or the like with a natural feeling which does not involve an incongruity.

Moreover, when a user operates the operating section to adjust a high cut-off frequency of the low pass filter 3x or a low cut-off frequency of the high pass filter 3y, it is possible to relatively change a frequency band between a low frequency sound emitted from the pillow speakers PR, PL and a high frequency sound emitted from the normal position speaker PF3. In this way, it is possible to fix a sound image in a sound image normal position desired by a user, thereby providing an acoustic space required by the user.

Moreover, the acoustic system 1 shown in Fig. 2(b) is preferable to have the signal source 2 which outputs a reproduction signal Din consisting of digital data.

Example 1

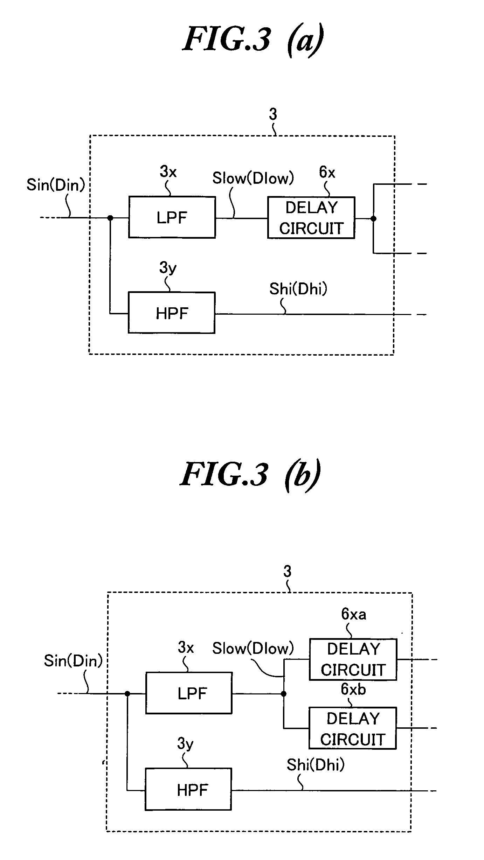

Next, description will be given to explain a more detailed example according to an embodiment shown in Fig. 2(a) with reference to Fig. 3. Figs. 3(a) and 3(b) are block diagrams showing two states of the control section 3 provided in the acoustic system of this example. In Figs. 3(a) and 3(b), elements which are the same as or corresponding to those in Figs. 2(a) and 2(b) are represented by the same reference numerals, with an analogue reproduction signal being represented by a letter S carrying a suffix, and a reproduction signal consisting of digital data being represented by a letter D carrying a suffix and enclosed within a parenthesis.

The acoustic system shown in Fig. 3(a) has a constitution similar to the acoustic system 1 shown in Figs. 2(a) and 2(b). On the other hand, the control section 3 of this example includes not only the low pass filter 3x and the high pass filter 3y, but also a delay circuit 6x which allows a user to properly adjust a delay time.

Where an analog reproduction signal Sin shown in Fig. 2(a) is supplied, the low pass filter 3x and the high pass filter 3y as well as the delay circuit 6x are all formed of analogue circuit. Then, the delay circuit 6x operates to delay a reproduction signal Slow of a low frequency component outputted from the low pass filter 3x, and supply the signal to the amplifiers 4xa, 4xb shown in Fig. 2(a), while the high pass filter 3y supplies a reproduction signal Shi of a high frequency component to the amplifier 4y shown in Fig. 2(a).

Where a digital reproduction signal Din shown in Fig. 2(b) is supplied, the low pass filter 3x and the high pass filter 3y as well as the delay circuit 6x are all formed of digital circuit. Then, the delay circuit 6x operates to delay a reproduction signal Dlow of a low frequency component outputted from the low pass filter 3x, and supply the signal to the D/A converters 5xa, 5xb shown in Fig. 2(b), while the high pass filter 3y supplies a reproduction signal Dhi of a high frequency component to the D/A converter 5y shown in Fig. 2(b).

According to the acoustic system equipped with the control section 3 shown in Fig. 3(a), since the delay circuit 6x is provided, the sound from the pillow speakers PR and PL will be emitted later than the sound emitted from the normal position speaker PF3. For this reason, not only a frequency difference (between low frequency sound and high frequency sound) between the sound emitted from the pillow speakers PR, PL and the sound emitted from the normal position speaker PF3, but also a delay of the sound emitted from the pillow speakers PR, PL with respect to the sound emitted from the normal position speaker PF3, will provide an effect that a sound image can be fixed in a position desired by a user, thus rendering a user (a driver or the like) sitting in the chair 100 such as a driver's seat to feel as if a music or the like is emitted from the normal position speaker PF3.

Namely, when a subsequent sound (from the pillow speakers PR and PL) is emitted following a preceding sound (emitted from the normal position speaker PF3), it is possible to make use of a hearing characteristic in which a sound image is dragged to the preceding sound, so that the sound image can be fixed in the vicinity of the normal position speaker. As a result, it is possible for a user to hear a music or the like with a natural feeling without any incongruity.

Moreover, if a user adjusts a delay time of the delay circuit 6x, it is possible to change a delay time of a sound emitted from the pillow speakers PR and PL with respect to a sound emitted from the normal position speaker PF3, so as to fix a sound image in a position desired by a user. In this way, it is possible to provide an acoustic space satisfying the user's desire.

Next, description will be given to explain an acoustic system shown in Fig. 3(b).
As shown in Fig. 3(b), the acoustic system of this example has the same constitution as the acoustic system 1 shown in Figs. 2(a) and 2(b). On the other hand, the control section 3 of this example includes not only the low pass filter 3x and the high pass filter 3y, but also the delay circuit 6xa and another delay circuit 6xb which allow a user to properly adjust a delay time and are connected with the low pass filter 3x.

Where an analog reproduction signal Sin shown in Fig. 2(a) is supplied, the low pass filter 3x and the high pass filter 3y as well as the delay circuits 6xa, 6xb are all formed of analog circuit. Then, the delay circuits 6x, 6xb will operate to delay a reproduction signal Slow of a low frequency component outputted from the low pass filter 3x, which is then supplied to the amplifiers 4xa, 4xb shown in Fig. 2(a), while the high pass filter 3y supplies a reproduction signal Shi of a high frequency component to the amplifier 4y shown in Fig. 2(a).

Where a digital reproduction signal Din shown in Fig. 2(b) is supplied, the low pass filter 3x and the high pass filter 3y as well as the delay circuits 6xa, 6xb are all formed of digital circuit. Then, the delay circuits 6xa, 6xb will operate to delay a reproduction signal Dlow of a low frequency component outputted from the low pass filter 3x, which is then supplied to the D/A converters 5xa, 5xb shown in Fig. 2(b), while the high pass filter 3y supplies a reproduction signal Dhi of a high frequency component to the D/A converter 5y shown in Fig. 2(b).

According to the acoustic system equipped with the control section 3 shown in Fig. 3(b), since the delay circuits 6xa, 6xb are provided, the sound from the pillow speakers PR and PL will be emitted later than the sound emitted from the normal position speaker PF3. For this reason, not only a frequency difference (between low frequency sound and high frequency sound) between the sound emitted from the pillow speakers PR, PL and the sound emitted from the normal position speaker PF3, but also a delay of the sound emitted from the pillow speakers PR, PL with respect to the sound emitted from the normal position speaker PF3, will provide an effect that a sound image can be fixed in a position desired by a user, thus rendering a user (a driver or the like) sitting in the chair 100 such as a driver's seat to feel as if a music or the like is emitted from the normal position speaker PF3. As a result, it is possible for a user to hear a music or the like with a natural feeling without any incongruity.

Moreover, once a user adjusts the respective delay times of the delay circuits 6xa, 6xb individually and independently, it is possible to change a delay time of a sound emitted from the pillow speaker PR with respect to a sound emitted from the normal position speaker PF3, as well as a delay time of a sound emitted from the pillow speaker PL with respect to a sound emitted from the normal position speaker PF3. In this way, it is possible to more accurately adjust a normal position of a sound image, thereby providing an acoustic space satisfying a user's desire.

Furthermore, as in a case where a speaker PF1 provided on a front door of a vehicle such as an automobile and a speaker PF2 provided on a front pillar between the front door and the front glass are all used as normal position speakers, if the normal position speaker PF3 is not positioned on a center plane passing through a driver, a distance from the normal position speaker PF1 to one ear of the user will be different from a distance from the normal position speaker PF2 to the other ear of the user. On the other hand, if a user adjusts the delay times of the delay circuits 6xa and 6xb, a delay time of a sound emitted from the pillow speaker PR with respect to a sound emitted from the normal position speaker PF2 can be made equal to a delay time of a sound emitted from the pillow speaker PL with respect to a sound emitted from the normal position speaker PF1, PF2. For this reason, it is possible to perform an adjustment to fix a sound image to a position desired by a user, thus allowing a user to hear a music or the like with a natural feeling not involving any incongruity.

Example 2

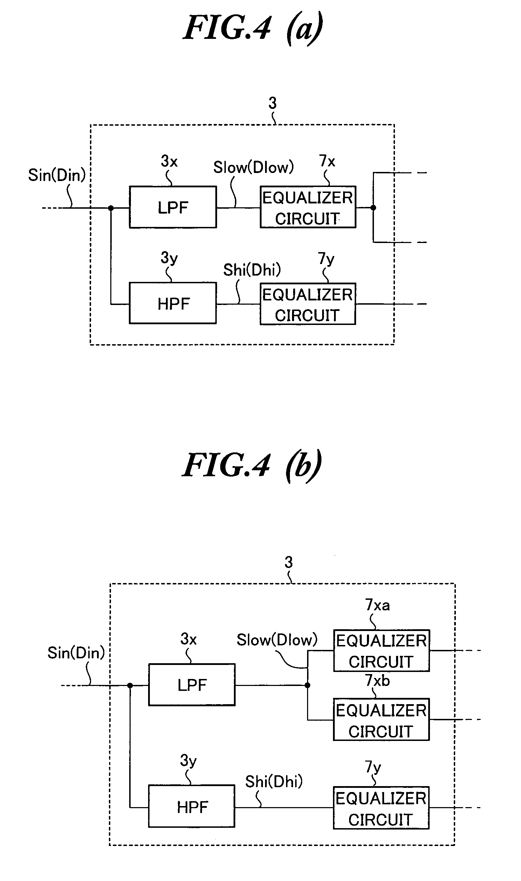

Next, description will be given to explain a further example according to an embodiment shown in Figs. 2(a) and 2(b) with reference to Fig. 4. Figs. 4(a) and 4(b) are block diagrams showing two states of the control section 3 provided in the acoustic system of this example. In Figs. 4(a) and 4(b), elements which are the same as or corresponding to those in Figs. 2(a) and 2(b) are represented by the same reference numerals, with an analogue reproduction signal being represented by a letter S carrying a suffix, and a reproduction signal consisting of digital data being represented by a letter D carrying a suffix and enclosed within a parenthesis.

As shown in Fig. 4(a), the acoustic system of the present embodiment has a constitution similar to the acoustic system 1 shown in Figs. 2(a) and 2(b). On the other hand, the control section 3 of this example includes not only the low pass filter 3x and the high pass filter 3y, but also equalizer circuits 7x and 7y which allow a user to properly adjust a frequency characteristic.

Where an analog reproduction signal Sin shown in Fig. 2(a) is supplied, the low pass filter 3x and the high pass filter 3y as well as the equalizer circuits 7x and 7y are all formed of analog circuit. Then, the equalizer circuits 7x adjusts a frequency characteristic of a reproduction signal Slow of a low frequency component outputted from the low pass filter 3x, and supplies the signal to the amplifiers 4xa, 4xb shown in Fig. 2(a), while the equalizer circuit 7y adjusts a frequency characteristic of a reproduction signal Shi of a high frequency component outputted from the high pass filter 3y and supplies the signal to the amplifier 4y shown in Fig. 2(a).

Where a digital reproduction signal Din consisting of digital data shown in Fig. 2(b) is supplied, the low pass filter 3x and the high pass filter 3y as well as the equalizer circuits 7x and 7y are all formed of digital circuit. Then, the equalizer circuit 7x adjusts a frequency characteristic of a reproduction signal Dlow of a low frequency component outputted from the low pass filter 3x, and supplies the signal to the D/A converters 5xa, 5xb shown in Fig. 2(b), while the equalizer circuit 7y adjusts a frequency characteristic of a reproduction signal Dhi of a high frequency component outputted from the high pass filter 3y and supplies the signal to the D/A converter 5y shown in Fig. 2(a).

According to the acoustic system equipped with the control section 3 shown in Fig. 4(a), the low frequency sound emitted from the pillow speakers PR, PL and the high frequency sound emitted from the normal position speaker PF3 make it possible to fix a sound image in a position desired by a user. Further, the provision of the equalizer circuits 7x and 7y enables the acoustic system to reproduce a natural sound.

Namely, if the equalizer circuits 7x and 7y are not provided, and if a direction in which a low frequency sound emitted from the pillow speakers PR and PL travels towards a user is different from a direction in which a high frequency sound emitted from the normal position speaker PF3 travels towards the user, or if a sound quality or an acoustic characteristic depends on characteristics and attachment conditions of the pillow speakers PR, PL and the normal position speaker PF3, a generated sound can have a tone quality which is different from that of an original sound. In the present embodiment, since the equalizer circuits 7x and 7y are provided, a high frequency sound and a low frequency sound each having an adjusted frequency characteristic, will be emitted from the pillow speakers PR, PL and the normal position speaker PF3, thereby making it possible to inhibit an occurrence of sounds having different tone qualities, thus reproducing a natural sound.

As shown in Fig. 4(b), the acoustic system of this example has the same constitution as the acoustic system 1 shown in Figs. 2(a) and 2(b). On the other hand, the control section 3 of this example includes not only the low pass filter 3x and the high pass filter 3y, but also the equalizer circuits 7xa, 7xb, and 7y which allow a user to properly adjust a frequency characteristic.

Where an analog reproduction signal Sin shown in Fig. 2(a) is supplied, the low pass filter 3x and the high pass filter 3y as well as the equalizer circuits 7xa, 7xb, and 7y are all formed of analog circuit. Then, the equalizer circuits 7xa adjusts a frequency characteristic of a reproduction signal Slow of a low frequency component outputted from the low pass filter 3x, and supplies the signal to the amplifiers 4xa shown in Fig. 2(a), while the equalizer circuit 7xb adjusts a frequency characteristic of a reproduction signal Slow and supplies the signal to the amplifier 4xb shown in Fig. 2(a). Further, the equalizer circuit 7y adjusts a frequency characteristic of a reproduction signal Shi of a high frequency component outputted from the high pass filter 3y and supplies the signal to the amplifier 4y shown in Fig. 2(a).

Where a digital reproduction signal Din consisting of digital data shown in Fig. 2(b) is supplied, the low pass filter 3x and the high pass filter 3y as well as the equalizer circuits 7xa, 7xb and 7y are all formed of digital circuit. Then, the equalizer circuits 7xa and 7xb will adjust a frequency characteristic of a reproduction signal Dlow of a low frequency component outputted from the low pass filter 3x, and supply the signal to the D/A converters 5xa, 5xb shown in Fig. 2 (b), while the equalizer circuit 7y adjusts a frequency characteristic of a reproduction signal Dhi of a high frequency component outputted from the high pass filter 3y and supplies the signal to the D/A converter 5y shown in Fig. 2(a).

According to the acoustic system equipped with the control section 3 shown in Fig. 4(b), the low frequency sound emitted from the pillow speakers PR, PL and the high frequency sound emitted from the normal position speaker PF3 make it possible to fix a sound image in a position desired by a user. Further, the provision of the equalizer circuits 7xa, 7xb, and 7y enables the acoustic system to reproduce a natural sound.

Namely, if a user adjusts the frequency characteristic of the equalizer circuits 7xa, 7xb, and 7y, it is possible to inhibit an occurrence of sounds having different tone qualities by virtue of a low frequency sound emitted from the pillow speakers PR, PL and a high frequency sound emitted from the normal position speaker PF3, thereby reproducing a natural sound.

Example 3

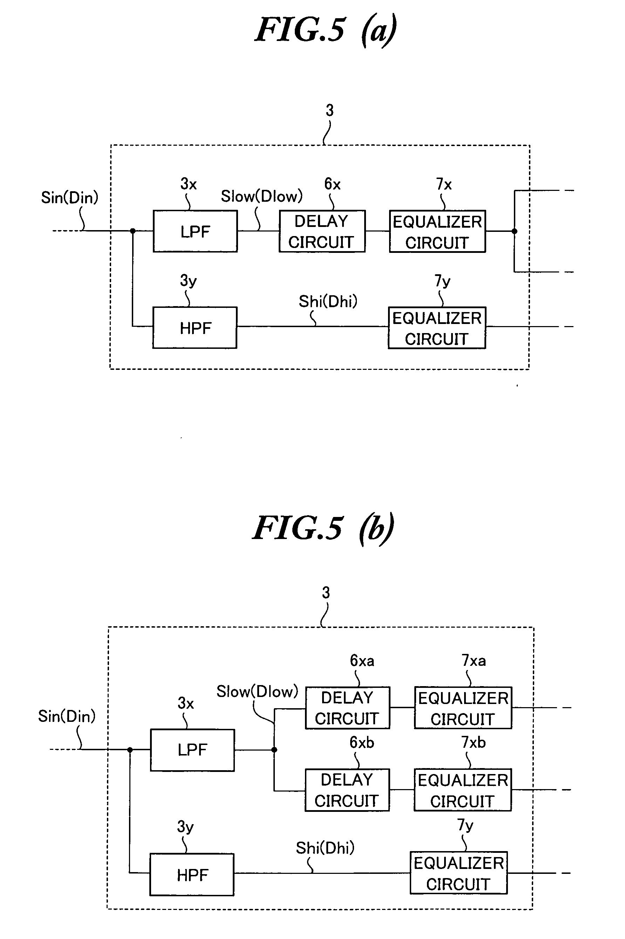

Next, description will be given to explain a further example according to an embodiment shown in Figs. 2(a) and 2(b) with reference to Fig. 5. Figs. 5(a) and 5(b) are block diagrams showing two states of the control section 3 provided in the acoustic system of this example. In Figs. 5(a) and 5(b), elements which are the same as or corresponding to those in Figs. 2(a) and 2(b) are represented by the same reference numerals, with an analogue reproduction signal being represented by a letter S carrying a suffix, and a reproduction signal consisting of digital data being represented by a letter D carrying a suffix and enclosed within a parenthesis.

As shown in Fig. 5(a), the acoustic system of this example has a constitution similar to the acoustic system 1 shown in Figs. 2(a) and 2(b). On the other hand, the control section 3 of this example includes not only the low pass filter 3x and the high pass filter 3y, but also a delay circuit 6x and the equalizer circuits 7x, 7y similar to those shown in Fig. 3(a) and Fig. 3(b),

Where an analog reproduction signal Sin shown in Fig. 2(a) is supplied, the low pass filter 3x and the high pass filter 3y, the delay circuit 7x as well as the equalizer circuits 7x and 7y are all formed of analog circuit. Then, the delay circuit 6 delays a reproduction signal Slow of a low frequency component outputted from the low pass filter 3x. Further, the equalizer circuits 7x adjusts a frequency characteristic of a reproduction signal outputted from the delay circuit 6x, and supplies the signal to the amplifiers 4xa, 4xb shown in Fig. 2(a), while the equalizer circuit 7y adjusts a frequency characteristic of a reproduction signal Shi of a high frequency component outputted from the high pass filter 3y and supplies the signal to the amplifier 4y shown in Fig. 2(a).

Where a digital reproduction signal Din consisting of digital data shown in Fig. 2(b) is supplied, the low pass filter 3x, the high pass filter 3y and the delay circuit 6x as well as the equalizer circuits 7x and 7y are all formed of digital circuit. Then, the delay circuit 6x delays a reproduction signal Dlow of a low frequency component outputted from the low pass filter 3x. Further, the equalizer circuit 7x adjusts a frequency characteristic of a reproduction signal outputted from the delay circuit 6x and supplies the signal to the D/A converters 5xa, 5xb shown in Fig. 2(b), while the equalizer circuit 7y adjusts a frequency characteristic of a reproduction signal Dhi of a high frequency component outputted from the high pass filter 3y and supplies the signal to the D/A converter 5y shown in Fig. 2(b).

According to the acoustic system equipped with the control section 3 shown in Fig. 5(a), it is possible to provide an effect of an acoustic system of an example shown in Fig. 3(a) and another effect of an acoustic system of an example shown in Fig. 4(a).

That is, the provision of the delay circuit 6xmakes it possible to fix a sound image in a position desired by a user. Meanwhile, once a user adjusts a delay time of the delay circuit 6x, it is possible to change a delay time of a sound emitted from the pillow speakers PR and PL with respect to a sound emitted from the normal position speaker PF3, thereby fixing a sound image in a position desired by a user. Further, if a low frequency sound and a high frequency sound having their frequency characteristics adjusted by the equalizer circuits 7x and 7y are emitted from the pillow speakers PR, PL and the normal position speaker PF3, it is possible to inhibit an occurrence of sounds having different tone qualities, thereby reproducing a natural sound.

Next, description will be given to explain an acoustic system shown in Fig. 5(b). In Fig. 5(b), elements which are the same as or corresponding to those in Figs. 2(a) and 2(b) are represented by the same reference numerals.

As shown in Fig. 5(b), the acoustic system of this example has a constitution similar to the acoustic system 1 shown in Figs. 2(a) and 2(b). On the other hand, the control section 3 of this example includes not only the low pass filter 3x and the high pass filter 3y, but also the delay circuits 6xa, 6xb and the equalizer circuits 7x, 7y which can be properly adjusted by a user.

Where an analog reproduction signal Sin shown in Fig. 2(a) is supplied, the low pass filter 3x and the high pass filter 3y, the delay circuits 6xa, 6xb as well as the equalizer circuits 7xa, 7xb, and 7y are all formed of analog circuit.

Then, the delay circuits 6xa, 6xb will delay a reproduction signal Slow of a low frequency component outputted from the low pass filter 3x. Further, the equalizer circuits 7xa adjusts a frequency characteristic of a reproduction signal outputted from the delay circuit 6xa, and supplies the signal to the amplifier 4xa shown in Fig. 2(b). Moreover, the equalizer circuit 7xb adjusts a frequency characteristic of a reproduction signal outputted from the delay circuit 6xa and supplies the signal to the amplifier 4xb shown in Fig. 2(b). Furthermore, the equalizer circuit 7y adjusts a frequency characteristic of a reproduction signal Shi of a high frequency component outputted from the high pass filter 3y and supplies the signal to the amplifier 4y shown in Fig. 2(a).

Where a reproduction signal Din consisting of digital data shown in Fig. 2(b) is supplied, the low pass filter 3x and the high pass filter 3y, the delay circuits 6xa, 6xb as well as the equalizer circuits 7xa, 7xb and 7y are all formed of digital circuit.

Then, the delay circuits 6xa, 6xb will delay a reproduction signal Dhi of a low frequency component outputted from the low pass filter 3x, while the equalizer circuit 7xa adjusts a frequency characteristic of a reproduction signal outputted from the delay circuit 6xa and supplies the signal to the D/A converter 5xa shown in Fig. 2(b). Meanwhile, the equalizer circuit 7xb adjusts a frequency characteristic of a reproduction signal outputted from the delay circuit 6xa and supplies the signal to the D/A converter 5xa shown in Fig. 2(b). Further, the equalizer circuit 7y adjusts a frequency characteristic of a reproduction signal Dhi of a high frequency component outputted from the high pass filter 3y and supplies the signal to the D/A converter 5y shown in Fig. 2(a).

According to the acoustic system equipped with the control section 3 shown in Fig. 5(b), it is possible to provide an effect of an acoustic system of an example shown in Fig. 3(b) and another effect of an acoustic system of an example shown in Fig. 4(b).

Namely, since the delay circuits 6xa, 6xb are provided, the sound from the pillow speakers PR and PL will be emitted later than the sound emitted from the normal position speaker PF3. For this reason, not only a frequency difference (between a low frequency sound and a high frequency sound) between the sound emitted from the pillow speakers PR, PL and the sound emitted from the normal position speaker PF3, but also a delay of the sound emitted from the pillow speakers PR, PL with respect to the sound emitted from the normal position speaker PF3, will provide an effect that a sound image can be fixed in a position desired by a user, thus rendering a user (a driver or the like) sitting in the chair 100 such as a driver's seat to feel as if a music or the like is emitted from the normal position speaker PF3. As a result, it is possible for a user to hear a music or the like with a natural feeling not involving any incongruity.

Moreover, if a user adjusts the respective delay times of the delay circuits 6xa, 6xb individually and independently, it is possible to change a delay time of a sound emitted from the pillow speaker PR with respect to a sound emitted from the normal position speaker PF3, as well as a delay time of a sound emitted from the pillow speaker PL with respect to a sound emitted from the normal position speaker PF3. In this way, it is possible to adjust a normal position of a sound image with a higher precision, thereby providing an acoustic space satisfying a user's desire.

Furthermore, when a user adjusts the frequency characteristics of the equalizer circuits 7xa, 7xb, and 7y, it is possible to inhibit an occurrence of sounds having different tone qualities by virtue of a sound emitted from the pillow speakers PR, PL and a sound emitted from the normal position speaker PF3. Example 4

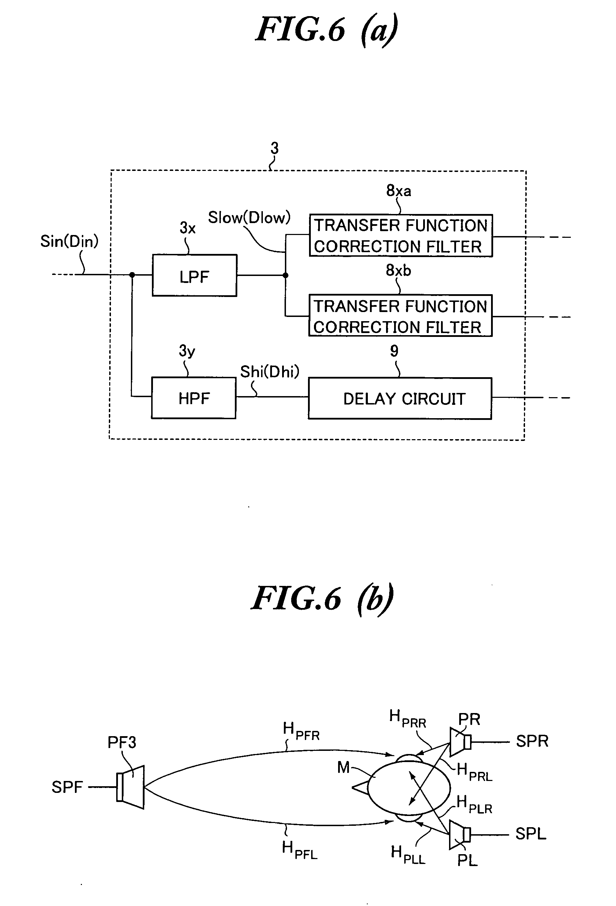

Next, description will be given to explain a further example according to an embodiment shown in Figs. 2(a) and 2(b) with reference to Fig. 6. Fig. 6(a) is a block diagram showing a constitution of the control section 3 provided in the acoustic system of this example. In Fig. 6(a), elements which are the same as or corresponding to those in Figs. 2 (a) and 2(b) are represented by the same reference numerals, with an analogue reproduction signal being represented by a letter S carrying a suffix, and a reproduction signal consisting of digital data being represented by a letter D carrying a suffix and enclosed within a parenthesis. Fig. 6(b) is an explanatory view showing constitutions of transfer function correction filters 8xa and 8xb provided in the control section 3.

As shown in Fig. 6(a), the acoustic system of this example has a constitution similar to the acoustic system 1 shown in Figs. 2(a) and 2(b). On the other hand, the control section 3 of this example includes not only the low pass filter 3x and the high pass filter 3y, but also the transfer function correction filters 8xa, 8xb and a delay circuit 9.

Where a reproduction signal Sin consisting of analogue data shown in Fig. 2(a) is supplied, the low pass filter 3x and the high pass filter 3y, the transfer function correction filters 8xa, 8xb and the delay circuit 9 are all formed of analogue circuit. Then, the transfer function correction filter 8xa is connected between the low pass filter 3x and the amplifier 4xa, the transfer function correction filter 8xb is connected between the low pass filter 3x and the amplifier 4xb, and the delay circuit 9 is connected between the high pass filter 3y and the amplifier 4y.

Moreover, where a reproduction signal Din consisting of digital data shown in Fig. 2(b) is supplied, the low pass filter 3x and the high pass filter 3y, the transfer function correction filters 8xa, 8xb and the delay circuit 9 are all formed of digital circuit. Then, the transfer function correction filter 8xa is connected between the low pass filter 3x and the D/A converter 5xa, the transfer function correction filter 8xb is connected between the low pass filter 3x and the D/A converter 5xb, and the delay circuit 9 is connected between the high pass filter 3y and the D/A converter 5xb.

Here, the delay circuit 9 is set at a delay time equal to input/output delay time of the transfer function correction filters 8xa and 8xb. For example, in view of a time required in the operations performed by the transfer function correction filters 8xa and 8xb, a delay time is set in the delay circuit 9. On the other hand, it is also possible to form a constitution not containing the delay circuit 9.

The transfer function correction filters 8xa and 8x are formed of FIR filter or IIR filter, with the characteristics of the respective filters being designed in accordance with the following principles.

Namely, as schematically shown in Fig. 6(b), the following transfer functions are measured in advance which include: a transfer function HPRR indicating a transfer for a sound emitted from the pillow speaker PR located behind a listener M on his or her right side to reach the right ear of the listener M; a transfer function HPRL indicating a transfer for a sound emitted from the pillow speaker PR to reach the left ear of the listener M; a transfer function HPLL indicating a transfer for a sound emitted from the pillow speaker PL located behind a listener M on his or her left side to reach the left ear of the listener M; a transfer function HPLR indicating a transfer for a sound emitted from the pillow speaker PL to reach the right ear of the listener M; a transfer function HPFR indicating a transfer for a sound emitted from the normal position speaker PF3 to reach the right ear of the listener M; and a transfer function HPFL indicating a transfer for a sound emitted from the normal position speaker PF3 to reach the left ear of the listener M.

A filter characteristic (transfer function) SRTFL of the transfer function correction filter 8xa and a filter characteristic (transfer function) SRTFR of the transfer function correction filter 8xb can be applied to the following determinants represented by the following equations (1) and (2).

[Equation 1]

$$\begin{bmatrix} H_{PLL} & H_{PRL} \\ H_{PLR} & H_{PRR} \end{bmatrix} \begin{bmatrix} SRTF_L \\ SRTF_R \end{bmatrix} = \begin{bmatrix} H_{PFL} \\ H_{PFR} \end{bmatrix} \quad \cdots \quad (1)$$

[Equation 2]

$$\begin{bmatrix} SRTF_L \\ SRTF_R \end{bmatrix} = \begin{bmatrix} H_{PLL} & H_{PRL} \\ H_{PLR} & H_{PRR} \end{bmatrix}^{-1} \begin{bmatrix} H_{PFL} \\ H_{PFR} \end{bmatrix} \quad \cdots \quad (2)$$

As compared with a direct sound directly traveling from the pillow speakers PR and PL to the right and left ears of the listener M, a level of a cross talk sound traveling from the pillow speakers PR and PL to the left and right ears of the listener M on the opposite side through the head portion of the listener M is sufficiently small. In this way, the transfer functions HPRL and HPLR can be approximated by zero, the above equation (2) can be used as the following equation (3) which can then be transformed, thereby finding the transfer function SRTFL of the transfer function correction filter 8xa and the transfer function SRTFR of the transfer function correction filter 8xb, as shown in the following equation (4).

Then, the transfer function correction filter 8xa having a filter characteristic expressed by a transfer function SRTFL, and the transfer function correction filter 8xb having a filter characteristic expressed by a transfer function SRTFR are formed of analogue filter or digital filter consisting of an FIR filter or an IIR filter.

[Equation 3]

$$
\begin{bmatrix} SRTF_L \\ SRTF_R \end{bmatrix} = \begin{bmatrix} H_{PLL} & 0 \\ 0 & H_{PRR} \end{bmatrix}^{-1} \begin{bmatrix} H_{PFL} \\ H_{PFR} \end{bmatrix} \quad \dots (3)
$$

[Equation 4]

$$
\begin{bmatrix} SRTF_L \\ SRTF_R \end{bmatrix} = \begin{bmatrix} H_{PFL}/H_{PLL} \\ H_{PFR}/H_{PRR} \end{bmatrix} \quad \dots (4)
$$

According to the acoustic system equipped with the control section 3 shown in Fig. 6(a), a sound image based on a low frequency sound emitted from the pillow speakers PR and PL is fixed on the normal position speaker PF3 side. In this way, it is possible for a user to hear a music or the like with a natural feeling not involving any incongruity.

Furthermore, since a low frequency sound is emitted from the pillow speakers PR and PL, even if there will be some individual differences among ear shapes of listeners M, it is still possible to alleviate a change in sound quality.

Moreover, even in a case where a low frequency sound is emitted from the pillow speakers PR and PL to change the head position of the listener M so that a transfer function from the pillow speakers PR and PL to both ears of the listener has changed, it is still possible to alleviate an influence of a change in the transfer function, thereby fixing a sound image on the normal position speaker PF3 side.

Further, it is possible to reproduce an improved clear sound by emitting a high frequency sound from the normal position speaker PF3.

Example 5

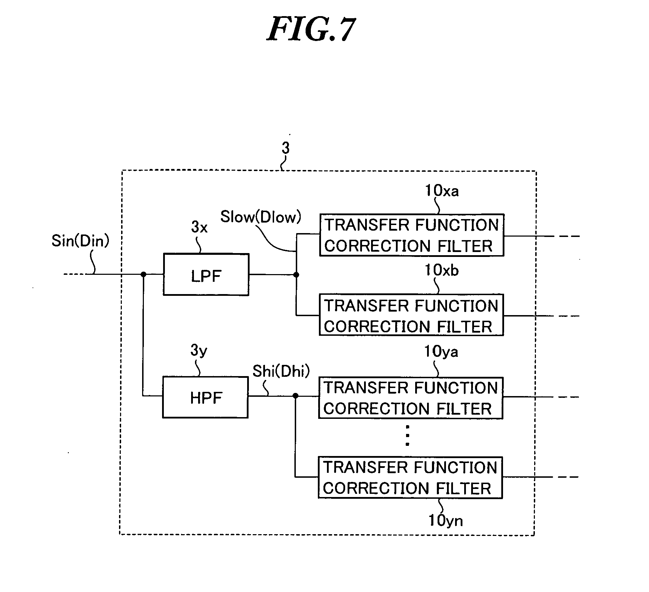

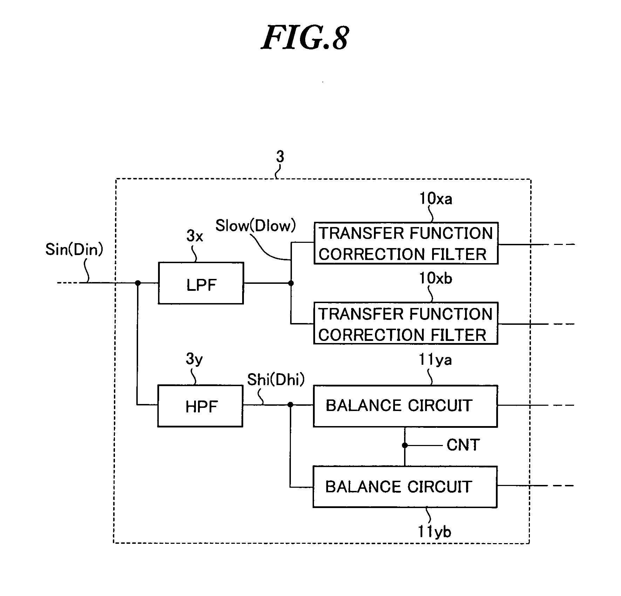

Next, description will be given to explain a further example according to an embodiment shown in Figs. 2(a) and 2(b) with reference to Fig. 7. Fig. 7 is a block diagram showing a constitution of the control section 3 provided in the acoustic system of this example. In Fig. 7, elements which are the same as or corresponding to those in Figs. 2(a) and 2(b) are represented by the same reference numerals, with an analogue reproduction signal being represented by a letter S carrying a suffix, and a reproduction signal consisting of digital data being represented by a letter D carrying a suffix and enclosed within a parenthesis. Fig. 8 is a view showing constitutions of transfer function correction filters 10xa, 10xb, 10ya - 10yn provided in the control section 3.

The acoustic system of this example has a constitution similar to the acoustic system 1 shown in Figs. 2(a) and 2(b).

In the acoustic system 1 shown in Fig. 2(a) there is provided an amplifier 4y for driving one normal position speaker PF3. On the other hand, in the acoustic system of this example there are provided a plurality of amplifiers having the same function as the amplifier 4y for driving a plurality of normal position speakers. Further, in the acoustic system 1 shown in Fig. 2(a) there are provided the D/A converter 5y and the amplifier 4y for driving one normal position speaker PF3. On the other hand, in the acoustic system of this example there are provided a plurality of D/A converters and amplifiers having the same functions as the D/A converter 5y and the amplifier 4y for driving a plurality of normal position speakers PF3.

As shown in Fig. 7, the control section 3 has not only the low pass filter 3x and the high pass filter 3y, but also the transfer function correction filters 10xa, 10xb, and 10ya - 10yn.

Where a reproduction signal Sin consisting of analogue data shown in Fig. 2(b) is supplied, the low pass filter 3x and the high pass filter 3y, the transfer function correction filters 10xa, 10xb, and 10ya - 10yn are all formed of analogue circuit. Then, the transfer function correction filter 10xa is connected between the low pass filter 3x and the amplifier 4xa, the transfer function correction filter 10xb is connected between the low pass filter 3x and the amplifier 4xb, and the transfer function correction filters 10ya - 10yn are connected between the high pass filter 3y and a plurality of the foregoing amplifiers.

Moreover, where a reproduction signal Din consisting of digital data shown in Fig. 2(b) is supplied, the low pass filter 3x and the high pass filter 3y, the transfer function correction filters 10xa, 10xb, and 10ya - 10yn are all formed of digital circuit. Then, the transfer function correction filter 10xa is connected between the low pass filter 3x and the D/A converter 5xa, the transfer function correction filter 10xb is connected between the low pass filter 3x and the D/A converter 5xb, and the transfer function correction filters 10ya - 10yn are connected between the high pass filter 3y and a plurality of the foregoing D/A converters.

Here, the transfer function correction filters 10ya-10yn are audio filters formed by utilizing trans-oral system.

The foregoing trans-oral system will be described in the following with reference to Fig. 6(b). Namely, there are influences from the following transfer functions including: a transfer function HPRR indicating a transfer for a sound emitted from the pillow speaker PR located behind a listener M on his or her right side to reach the right ear of the listener M; a transfer function HPRL indicating a transfer for a sound emitted from the pillow speaker PR to reach the left ear of the listener M; a transfer function HPLL indicating a transfer for a sound emitted from the pillow speaker PL located behind a listener M on his or her left side to reach the left ear of the listener M; a transfer function HPLR indicating a transfer for a sound emitted from the pillow speaker PL to reach the right ear of the listener M. These influences are removed, followed by adding transfer functions HPFR, HPFL indicating a transfer for a sound emitted from the normal position speaker PF3 located ahead of the listener M to reach both ears of the listener M, thereby making it possible to form a virtual source (the normal position speaker PF3 in the case of Fig. 6(b)) of a sound emitted from the pillow speakers PR and PL.

When a plurality of normal position speakers are taken as the above virtual sound source, it is possible to measure a transfer function for a sound to travel from the virtual sound source position desired by a user to the ears of a listener, and to find the respective transfer functions of the transfer function correction filters 10ya-10yn from the foregoing transfer function and an inverse transfer function of a transfer function for a sound to travel from a plurality of normal position speakers to the left and right ears of the listener. In this way, high frequency sound of reproduction signal can be corrected by the respective filters so as to remove an influence of transfer function from a plurality of normal position speakers, thereby making it possible to fix a sound image in one virtual sound source.

According to the acoustic system of the present embodiment equipped with the control section 3 shown in Fig. 7, a high frequency sound emitted from the plurality of normal position speakers and a low frequency sound emitted from the pillow speakers PR and PL can be fixed in such a virtual sound source. For this reason, it is possible for a user to hear a music or the like with a natural feeling not involving any incongruity.

Example 6

Next, description will be given to explain a further example according to an embodiment shown in Figs. 2(a) and 2(b) with reference to Fig. 8. Fig. 8 is a block diagram showing a constitution of the control section 3 provided in the acoustic system of this example. In Fig. 8, elements which are the same as or corresponding to those in Figs. 2(a) and 2(b) are represented by the same reference numerals, with an analogue reproduction signal being represented by a letter S carrying a suffix, and a reproduction signal consisting of digital data being represented by a letter D carrying a suffix and enclosed within a parenthesis.

The acoustic system of the present embodiment has the same constitution as the acoustic system shown in Figs. 2(a) and 2(b). On the other hand, similar to the above-described example 6, the acoustic system of this example drives not only the pillow speakers PR and PL, but also two normal position speakers. Further, as shown in Fig. 8, the control section 3 has not only the low pass filter 3x and the high pass filter 3y, but also the transfer function correction filters 10xa, 10xb, and balance circuits 11ya and 11yb.

Where an analogue reproduction signal Sin shown in Fig. 2(a) is supplied, the low pass filter 3x, the high pass filter 3y, the transfer function correction filters 10xa and 10xb, the balance circuits 11ya and 11yb are all formed of analog circuit, but will be formed of digital circuit when the reproduction signal Din consisting of digital data shown in Fig. 2(b) is supplied.

The transfer function correction filter 10xa is formed of an FIR filter or an IIR filter, or an analog filter or a digital filter which has the same filter characteristic as the transfer function correction filter 8xa shown in Fig. 6(a). Similarly, the transfer function correction filter 10×b is also formed of an FIR filter or an IIR filter, or an analog filter or a digital filter which has the same filter characteristic as the transfer function correction filter 8xa shown in Fig. 6(a).

The balance circuits 11ya and 11yb are formed of amplifying circuits which will change amplification factors or formed of attenuator circuits which will change attenuating amounts, all in response to a control signal CNT showing an operating amount used by a user when operating an operating section (now shown). Further, the balance circuits 11ya and 11yb will also adversely change the amplification factors or attenuating amounts in response to the user's operating amount.

Namely, once an amplification factor or an attenuating amount of the balance circuit 11ya increases in response to a user's operating amount, an amplification factor or an attenuating amount of the balance circuit 11yb will decrease.

According to the acoustic system of this example equipped with the control section 3 shown in Fig. 8, a sound image based on a high frequency sound emitted from the two normal position speakers and a low frequency sound emitted from the pillow speakers PR and PL will be fixed in the two normal position speakers. For this reason, it is possible for a user to hear a music or the like with a natural feeling not involving any incongruity.

Furthermore, if a user changes the amplification factors or attenuation factors of the balance circuits 11ya and 11yb, it is possible to adjust the sound volumes emitted from the two normal position speakers, thus making it possible to fix a sound image in a normal position speaker having a larger volume. In this way, it is possible to provide an acoustic space satisfying a user's desire.

Example 7

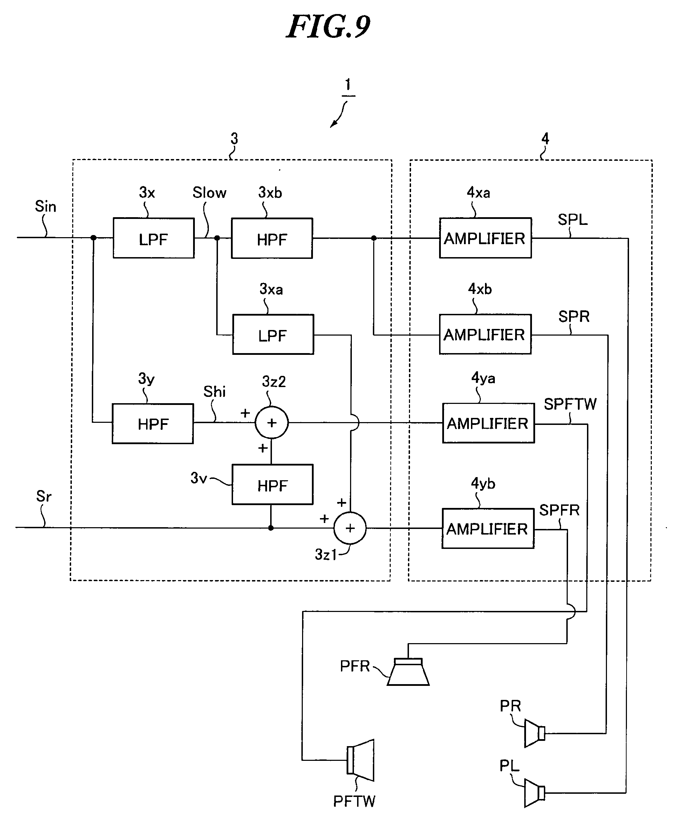

Next, description will be given to explain a further example according to an embodiment shown in Figs. 2(a) and 2(b), with reference to Fig. 9. Fig. 9 is a block diagram showing a constitution of an acoustic system 1 of this example, indicating the signal source 2 shown in Fig. 2(a).

As shown in Fig. 9, this acoustic system 1 forms so-called two-way speaker system which drives pillow speakers PR and PL, a front speaker PFR and a front speaker PFTW, in accordance with a reproduction signal Sin containing reproduction components of the pillow speakers PL and PR outputted from the signal source 2, and a reproduction signal Sr containing reproduction components of the normal position speaker PFR provided on the front door on the driver's seat side and a normal position speaker PFTW provided on the front pillar of the vehicle.

The control section 3 comprises: a low pass filter 3x which extracts a reproduction signal Slow of low frequency component from a reproduction signal Sin and outputs the extracted signal; a low pass filter 3xa which extracts a low frequency component of a low frequency signal Slow and outputs the extracted component; a high pass filter 3xb which extracts a high frequency component of a low frequency signal Slow and outputs the extracted component; a high pass filter 3y which extracts a reproduction signal Shi of a high frequency component from a reproduction signal Sin; an adder circuit 3zl which synthesizes a low frequency reproduction signal outputted from the low pass filter 3xa and a reproduction signal Sr and outputs the synthesized signal; a high pass filter 3v which extracts a high frequency component of the reproduction signal Sr; and an adder circuit 3z2 which synthesizes a high frequency reproduction signal outputted from the high pass filter 3v and a reproduction signal Shi of a high frequency component and outputs the synthesized signal.

The drive section 4 comprises: an amplifier 4xa which amplifies a reproduction signal outputted from the high pass filter 3xb and outputs a reproduction signal SPL to be supplied to the pillow speaker PL; an amplifier 4xb which amplifies a reproduction signal outputted from the high pass filter 3xb and outputs a reproduction signal SPR to be supplied to the pillow speaker PR; an amplifier 4ya which amplifies a reproduction signal outputted from the adder circuit 3z2 and outputs a reproduction signal SPFTW to be supplied to a normal position speaker PFTW; an amplifier 4yb which amplifies a reproduction signal outputted from the adder circuit 3z1 and outputs a reproduction signal SPFR to be supplied to a normal position speaker PFR.

According to the acoustic system 1 of the present embodiment having the above-described constitution, a low frequency component of a reproduction signal Slow outputted from the low pass filter 3x to the pillow speakers PR and PL is added to the reproduction signal Sr, while a high frequency reproduction signal outputted from the high pass filter 3v is added to the reproduction signal Shi outputted from the high pass filter 3y, thereby emitting a high frequency sound and a low frequency sound from the normal position speaker PFTW. In this way, it is possible to reproduce a sound such as a music or the like as if it is an actual music performance.

Moreover, where a normal position speaker provided on the front pillar of a vehicle such as an automobile is used as a tweeter speaker PFTW, it is possible to reproduce a sound such as a music or the like as if it is an actual music performance, by emitting a high frequency sound and a low frequency sound from the tweeter.

**Claims**

1. An acoustic system for driving pillow speakers provided on a headrest of a chair and a normal position speaker provided in a predetermined position of an area surrounding the chair, in accordance with a reproduction signal outputted from a signal source, said acoustic system comprising:

   a first low pass filter for extracting a low frequency component of the reproduction signal and supplying the low frequency component to the pillow speakers; and
   a first high pass filter for extracting a high frequency component of the reproduction signal and supplying the high frequency component to the normal position speaker.

2. The acoustic system according to claim 1, wherein the first low pass filter and the first high pass filter are capable of adjusting cut-off frequency.

3. The acoustic system according to claim 1 or 2, further comprising delay means for delaying a low frequency component to be supplied to the pillow speaker.

4. The acoustic system according to claim 3, wherein the delay means can be adjusted in its delay time.

5. The acoustic system according to any one of claims 1 to 4, further comprising equalizer means for adjusting a frequency characteristic of a low frequency component to be supplied to the pillow speakers, and another equalizer means for adjusting a frequency characteristic of a high frequency component to be supplied to the normal position speaker.

6. The acoustic system according to claim 1 or 2, further comprising a transfer function correction filter having a filter characteristic of adjusting a frequency characteristic of a low frequency component to be supplied to the pillow speakers, and fixing a sound emitted from the pillow speakers on the normal position speaker side.

7. The acoustic system according to claim 1 or 2, further comprising:

   a transfer function correction filter having a filter characteristic of adjusting a frequency characteristic of a low frequency component to be supplied to the pillow speakers, and fixing a sound emitted from the pillow speakers in a predetermined position between the normal position speaker and the pillow speakers; and
   another transfer function correction filter having a filter characteristic of adjusting a frequency characteristic of a high frequency component to be supplied to the normal position speaker, and fixing a sound emitted from the normal position speaker in a predetermined position between the normal position speaker and the pillow speakers.

8. The acoustic system according to claim 6, including two normal position speakers and balance means for adjusting an amplification factor or an attenuation factor of the high frequency component to be supplied to the respective normal position speakers.

9. The acoustic system according to claim 1 or 2, further comprising:

   a second high pass filter for extracting a high frequency component of a reproduction signal outputted from the signal source and containing a signal component of the normal position speaker; a second low pass filter for extracting a further lower frequency component from a low frequency component of a reproduction signal extracted by the first low pass filter;
   first adder means for adding together a high frequency component of a reproduction signal extracted by the first high pass filter and a high frequency component of a reproduction signal extracted by the second high pass filter; second adder means for adding together a reproduction signal containing a signal component to be supplied to the normal position speaker and a low frequency component of a reproduction signal extracted by the second low pass filter, and supplying the added signal to the normal position speaker.

# FIG.1

FRONT PILLAR FRONT DOOR

PF1

PF2

PF3

PR

101

PL

M

100

INSTALLMENT PANEL

# FIG.2 (a)

# FIG.2 (b)

## FIG.3 (a)

Sin(Din)

LPF  3x

Slow(Dlow)

DELAY CIRCUIT  6x

HPF  3y

Shi(Dhi)

3

## FIG.3 (b)

Sin(Din)

LPF  3x

Slow(Dlow)

DELAY CIRCUIT  6xa

DELAY CIRCUIT  6xb

HPF  3y

Shi(Dhi)

3

# FIG.4 (a)

# FIG.4 (b)

# FIG.5 (a)

# FIG.5 (b)

# FIG.6 (a)

# FIG.6 (b)

# FIG.7

Sin(Din)

3x

LPF

Slow(Dlow)

10xa

TRANSFER FUNCTION
CORRECTION FILTER

10xb

TRANSFER FUNCTION
CORRECTION FILTER

3y

HPF

Shi(Dhi)

10ya

TRANSFER FUNCTION
CORRECTION FILTER

⋮

TRANSFER FUNCTION
CORRECTION FILTER

10yn

3

# *FIG.8*

```
                                    3

                                                      10xa
                   Slow(Dlow)    ┌──────────────────────┐
          3x        ╱            │ TRANSFER FUNCTION    │ ─ ─ ─
Sin(Din)          ┌──────┐       │ CORRECTION FILTER    │
                  │      │       └──────────────────────┘
  ─ ─ ─ ●─────────│ LPF  │────●                 10xb
                  │      │     │ ┌──────────────────────┐
                  └──────┘     │ │ TRANSFER FUNCTION    │ ─ ─
                              └─│ CORRECTION FILTER    │
          3y      Shi(Dhi)       └──────────────────────┘
                   ╱                             11ya
                  ┌──────┐       ┌──────────────────────┐
          └───────│ HPF  │───●───│ BALANCE CIRCUIT      │ ─ ─
                  └──────┘   │    └──────────────────────┘
                            │              │ ● ── CNT
                            │    ┌──────────────────────┐
                            └────│ BALANCE CIRCUIT      │ ─ ─
                                 └──────────────────────┘
                                             11yb
```

# FIG.9

## INTERNATIONAL SEARCH REPORT

| International application No. |
| --- |
| PCT/JP2005/008041 |

| A. CLASSIFICATION OF SUBJECT MATTER |
| --- |
| Int.Cl$^7$ H04S1/00, B60R11/02, H04R1/02 |

According to International Patent Classification (IPC) or to both national classification and IPC

| B. FIELDS SEARCHED |
| --- |

Minimum documentation searched (classification system followed by classification symbols)
Int.Cl$^7$ H04S1/00, B60R11/02, H04R1/02

Documentation searched other than minimum documentation to the extent that such documents are included in the fields searched

| Jitsuyo Shinan Koho | 1922-1996 | Jitsuyo Shinan Toroku Koho | 1996-2005 |
| --- | --- | --- | --- |
| Kokai Jitsuyo Shinan Koho | 1971-2005 | Toroku Jitsuyo Shinan Koho | 1994-2005 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | JP 8-198058 A (Mazda Motor Corp.), 06 August, 1996 (06.08.96), All pages; all drawings (Family: none) | 1-9 |
| A | JP 2004-64739 A (Matsushita Electric Industrial Co., Ltd.), 26 February, 2004 (26.02.04), All pages; all drawings & US 2004/0032955 A1 & EP 1370115 A2 & CA 2430403 A1 | 1-9 |
| A | JP 7-87587 A (Mitsubishi Motors Corp.), 31 March, 1995 (31.03.95), All pages; all drawings (Family: none) | 1-9 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 27 July, 2005 (27.07.05) | 09 August, 2005 (09.08.05) |

| Name and mailing address of the ISA/ Japanese Patent Office | Authorized officer |
| --- | --- |
| Facsimile No. | Telephone No. |

Form PCT/ISA/210 (second sheet) (January 2004)

**INTERNATIONAL SEARCH REPORT**

| International application No. |
| --- |
| PCT/JP2005/008041 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 7-212890 A  (Fujitsu Ten Ltd.),<br>11 August, 1995 (11.08.95),<br>All pages; all drawings<br>(Family: none) | 1-9 |
| A | JP 9-19000 A  (Matsushita Electric<br>Industrial Co., Ltd.),<br>17 January, 1997 (17.01.97),<br>All pages; all drawings<br>(Family: none) | 1-9 |
| A | JP 57-115100 A  (Kenwood Corp.),<br>17 July, 1982 (17.07.82),<br>All pages; all drawings<br>(Family: none) | 1-9 |
| A | JP 3-196800 A  (Matsushita Electric<br>Industrial Co., Ltd.),<br>28 August, 1991 (28.08.91),<br>All pages; all drawings<br>(Family: none) | 1-9 |
| A | JP 57-18110 A  (Alpine Electronics, Inc.),<br>29 January, 1982 (29.01.82),<br>All pages; all drawings<br>& US 4464781 A          & DE 3125332 A | 1-9 |
| A | JP 59-218099 A  (Matsushita Electric<br>Industrial Co., Ltd.),<br>08 December, 1984 (08.12.84),<br>All pages; all drawings<br>(Family: none) | 1-9 |

Form PCT/ISA/210 (continuation of second sheet) (January 2004)

**REFERENCES CITED IN THE DESCRIPTION**

**Patent documents cited in the description**

- JP 2001112572 A